# FASCICULE DE BREVET EUROPEEN

(11) **EP 2 433 095 B1**
(45) Date de publication et mention de la délivrance du brevet: **03.04.2013**
(21) Numéro de dépôt: 10722047.7
(22) Date de dépôt: 17.05.2010
(51) Int. Cl.: G01C 21/16

(54) **DISPOSITIF INERTIEL DE LOCALISATION, CHAUSSURE ET EQUIPEMENT DE LA PERSONNE POURVUS D'UN TEL DISPOSITIF**
TRÄGHEITSVERFOLGUNGSEINRICHTUNG, SCHUH UND PERSÖNLICHE VORRICHTUNG, DIE MIT EINER SOLCHEN EINRICHTUNG AUSGESTATTET SIND
INERTIAL TRACKING DEVICE, SHOE AND PERSONAL APPARATUS PROVIDED WITH SUCH A DEVICE

(30) Priorité: 19.05.2009 FR 0902421
(43) Date de publication de la demande: 28.03.2012
(73) Titulaire: Commissariat à l'Énergie Atomique et aux Énergies Alternatives, 75015 Paris (FR)
(72) Inventeur: LAMY-PERBAL, Sylvie, F-91191 Gif-sur-Yvette Cedex (FR); PETRES, Clément, 37000 Tours (FR); RIWAN, Alain, F-94550 Chevilly-Larue (FR)
(74) Mandataire: Lavialle, Bruno François Stéphane
(86) Numéro de dépôt international: PCT/EP2010/056743
(87) Numéro de publication internationale: WO 2010/133553

(56) Documents cités:
- US-A1- 2009 071 805

## Description

La présente invention concerne un dispositif inertiel de localisation. L'invention s'adresse plus particulièrement à la navigation de personnes ignorant la topographie des lieux dans lesquels ils se trouvent et ne pouvant ou ne souhaitant pas utiliser la vue comme organe principal de repérage. L'invention peut ainsi être utilisée par les personnes malvoyantes. L'invention concerne également une chaussure et un équipement de la personne pourvus d'un tel dispositif.

Dans le domaine de l'aide à la navigation de personne, il est connu d'utiliser des systèmes de navigation par satellites de type GPS (de l'anglais « Global Positioning System » pour système de positionnement global) ou « GALILEO ». Ces systèmes requièrent que l'utilisateur porte un récepteur de signaux satellitaires qui incorpore une unité de calcul agencée pour calculer la position du récepteur à partir des signaux satellitaires. Associés à un logiciel cartographique; ces systèmes sont particulièrement efficaces. Toutefois, il n'est pas possible de capter les signaux satellitaires dans certains environnements et notamment à l'intérieur de certains bâtiments et par exemple dans le métro.

Les systèmes de navigation dédiés à la navigation à l'intérieur des bâtiments nécessitent que les bâtiments soient pré-équipés pour permettre un repérage par triangulation d'un dispositif porté par l'utilisateur. Ceci oblige l'utilisateur à cantonner ses déplacements dans les lieux qu'il sait équipés. En outre, les investissements à prévoir dissuadent généralement les organismes en charge de l'administration de ces bâtiments d'installer de tels systèmes.

La navigation des utilisateurs dans les bâtiments reste ainsi généralement assistée uniquement par une signalétique de guidage et de repérage. Ce mode d'assistance à la navigation est interdit aux personnes malvoyantes et nécessite des conditions de luminosité pas toujours adaptées aux circonstances (panne d'électricité par exemple).

Il a donc été proposé un système de navigation au moyen d'un dispositif inertiel comprenant une centrale inertielle comportant des gyromètres et des accéléromètres, et des moyens de liaison mécanique de la centrale inertielle à l'utilisateur. Connaissant le point de départ de l'utilisateur, comme l'entrée du bâtiment, il est possible de déterminer la trajectoire de l'utilisateur dans le bâtiment en intégrant les signaux d'accélération et de vitesse de rotation transmis par la centrale inertielle. Les résultats de ces systèmes de navigation se sont révélés encourageants malgré une relativement grande imprécision rendant difficile la navigation dans les bâtiments ayant un réseau de voies de circulation d'importante densité.

Une majeure partie de cette imprécision résulte de la dérive permanente des capteurs en particulier lorsque ceux-ci sont des capteurs bas de gamme à faible coût. Pour limiter les effets de cette dérive sur le calcul de la trajectoire, il a été envisagé de fixer la centrale inertielle sur un pied de l'utilisateur de manière à stopper l'intégration des signaux lorsque le pied est au sol. Ceci permet en outre de recaler certains paramètres de fonctionnement lorsque le pied est au sol, comme le recalage du repère de la centrale inertielle sur le repère terrestre. La précision du système a ainsi été améliorée de façon significative. US 2009/0071805 décrit un tel système, dans lequel un capteur placé dans la semelle de la chaussure détecte la partie stationnaire du pas de l'utilisateur (pose)

Un but de l'invention est de proposer un moyen pour améliorer encore la précision de ces systèmes en limitant les causes de perturbation externes au capteur.

On s'est aperçu que le pied n'est jamais complètement immobile pendant les phases de pose :
lorsque le pied est posé sur le sol, il peut être animé de petits mouvements, pour certains imperceptibles à l'oeil nu, transmis à la chaussure. Ces mouvements sont nécessaires à la marche et sont généralement incontrôlables. Ces mouvements entraînent une erreur qu'il est nécessaire de corriger et la correction logicielle d'une telle erreur n'est pas possible car cette erreur n'est pas quantifiable ni prédictible.

Pour remédier à cet inconvénient, on prévoit, selon l'invention, un dispositif inertiel de navigation destiné à équiper un objet en appui intermittent avec une surface, le dispositif comprenant une centrale inertielle comportant au moins un capteur inertiel, et des moyens de liaison mécanique de la centrale inertielle à l'objet. Les moyens de liaison sont agencés pour assurer, entre la centrale inertielle et l'objet, un couplage mécanique lorsque l'objet n'est pas en appui contre la surface et un découplage mécanique lorsque l'objet est en appui contre la surface de telle manière que la centrale inertielle soit sensiblement immobile par rapport à la surface lorsque l'objet est en appui contre la surface.

La surface est par exemple le sol. L'objet en question, en particulier lorsqu'il est tenu ou porté par un utilisateur comme par exemple une chaussure, peut bouger sous l'action volontaire ou involontaire de l'utilisateur lorsqu'il est en contact avec le sol. L'invention permet de limiter la transmission de ces mouvements à la centrale inertielle lors des phases d'appui contre le sol tout en assurant la transmission des mouvements de l'objet lorsque l'objet est en déplacement par rapport au sol. Ceci permet d'avoir une immobilité de la centrale la plus longue possible lors des phases d'appui de l'objet contre le sol.

De préférence, les moyens de liaison comprennent un support définissant un logement recevant la centrale inertielle à coulissement vertical et ayant une surface inférieure destinée à s'étendre en regard de la surface lorsque l'objet est en appui contre la surface et, avantageusement, la surface inférieure constitue une surface d'appui du support contre la surface.

Le support peut assurer une protection de la centrale inertielle et facilite la fixation ou l'intégration du dispositif inertiel à l'objet.

Selon deux modes de réalisation alternatifs :
- le logement de réception de la centrale inertielle débouche sur la surface inférieure pour permettre une mise en contact de la centrale inertielle avec la surface.
- la surface inférieure appartient à une plaque rigide fermant le logement de réception de la centrale inertielle, la centrale inertielle venant en appui contre la plaque rigide au moins lorsque la plaque rigide est en contact avec la surface.

La centrale inertielle est ainsi directement en contact avec le sol ou par l'intermédiaire d'une plaque rigide tandis que le support reprend l'effort d'appui du dispositif contre le sol.

Selon un mode de réalisation préférentiel, les moyens de liaison comprennent un fil souple reliant la centrale inertielle au support et ayant une longueur telle que le fil est tendu lorsque l'objet est décollé de la surface et lâche lorsque l'objet est en appui contre la surface et, avantageusement, le fil s'étend dans un conduit et comporte une extrémité attachée à la centrale inertielle et à l'opposé une extrémité attachée à un contrepoids reçu à coulissement vertical dans le support entre une position en saillie de la surface inférieure du support pour prendre appui sur la surface et une position enfoncée.

Le fil a une longueur adaptée pour à la fois entraîner la centrale inertielle pendant les phases de « vol » où l'objet est décollé du sol et maximiser la durée d'immobilisation de la centrale inertielle lors des phases d'appui de l'objet contre le sol.

L'invention a également pour objet une chaussure dans laquelle le support forme une partie de la semelle et un équipement de la personne, comme une canne, un déambulateur ou un bâton de marche, équipé d'un dispositif de navigation conforme à l'invention.

D'autres caractéristiques et avantages de l'invention ressortiront à la lecture de la description qui suit de modes de réalisation particuliers non limitatifs de l'invention.

Il sera fait références aux dessins annexés, parmi lesquels :
- la figure 1 est une vue schématique en coupe longitudinale d'une chaussure équipée d'un dispositif conforme à un premier mode de réalisation de l'invention, la chaussure étant décollée du sol,
- la figure 2 est une vue analogue à la figure 1 de cette chaussure appliquée contre le sol,
- la figure 3 est une vue analogue à la figure 1 d'une chaussure équipée d'un dispositif conforme à un deuxième mode de réalisation de l'invention,
- la figure 4 est une vue schématique en coupe transversale d'une chaussure équipée de ce dispositif, la figure 4 illustrant une variante de positionnement du dispositif,
- la figure 5 est une vue analogue à la figure 1 d'une chaussure équipée d'un dispositif selon un troisième mode de réalisation de l'invention,
- la Figure 6 est une vue schématique partielle d'un bâton de marche équipé du dispositif conforme au deuxième mode de réalisation.

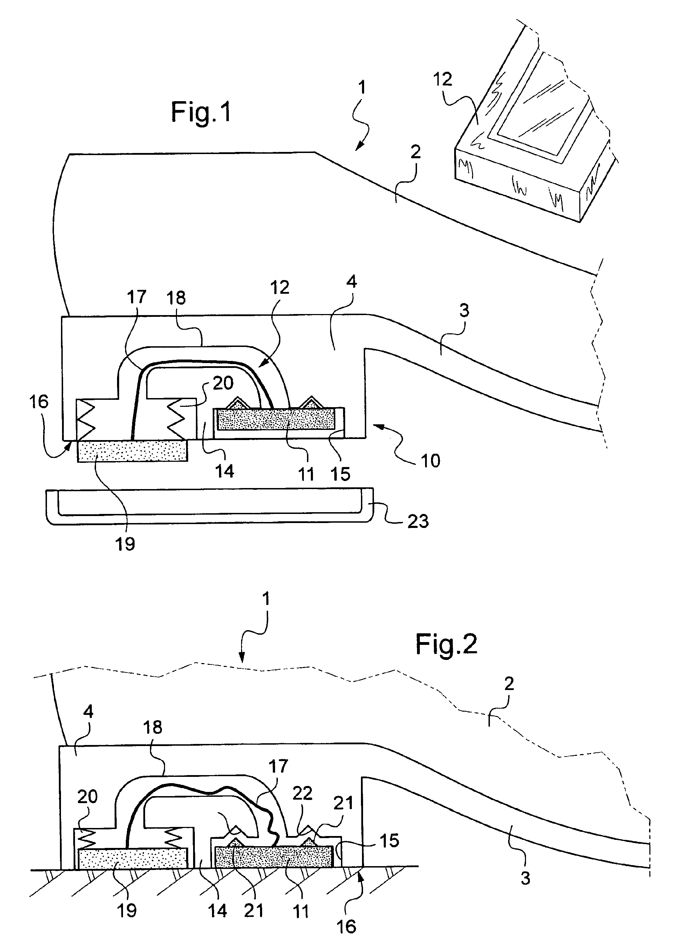

En référence aux figures 1 à 5, l'invention est décrite en application à une chaussure 1 comportant une tige 2 et une semelle 3 dont la partie arrière est conformée en talon 4 surélevé.

La chaussure 1 incorpore un dispositif inertiel de navigation 10 comprenant une centrale inertielle 11 et des moyens de liaison mécanique 12 de la centrale inertielle 11 à la chaussure 1.

La centrale inertielle 11 comprend de façon connue en soi des gyromètres et des accéléromètres reliés à une unité de calcul elle-même reliée à une batterie d'alimentation et à un émetteur récepteur permettant une liaison sans fil (de préférence hertzienne) de l'unité de calcul avec un terminal numérique 13 intégrant un programme de calcul de trajectoire et un logiciel de cartographie. L'unité de calcul est agencée pour récupérer les signaux en provenance des gyromètres et des accéléromètres et effectuer un traitement de ceux-ci de manière à pouvoir communiquer au terminal numérique 13 des données lui permettant de déterminer la trajectoire suivie par la centrale inertielle 11. Le terminal numérique 13 est du type assistant personnel numérique (ou PDA) et le logiciel de cartographie permet de reporter la trajectoire calculée dans une carte des lieux mémorisée dans le terminal et de déterminer un itinéraire à suivre pour rejoindre un point d'arrivée préprogrammé. Le terminal numérique 13 comprend en outre un programme de synthèse vocale lui permettant de communiquer vocalement à l'utilisateur l'itinéraire à suivre.

Les moyens de liaison 12 sont agencés pour assurer, entre la centrale inertielle 11 et la chaussure 1, un couplage mécanique lorsque la chaussure n'est pas en appui contre le sol (figure 1) et un découplage mécanique lorsque la chaussure est en appui contre le sol de telle manière que la centrale inertielle 11 soit sensiblement immobile par rapport au sol lorsque la chaussure est en appui contre le sol (figure 2).

En référence plus particulièrement aux figures 1 et 2, et selon le premier mode de réalisation, les moyens de liaison 12 comprennent un support 14 définissant un logement 15 recevant la centrale inertielle 11 à coulissement vertical et ayant une surface inférieure 16 destinée à s'étendre en regard du sol lorsque la chaussure est en appui contre le sol. La surface inférieure 16 constitue une surface d'appui du support 14 contre le sol. Le logement 15 débouche sur la surface inférieure 16 pour permettre une mise en contact de la centrale inertielle 14 avec le sol. Le support 14 est logé dans le talon 4 de la chaussure 1 et forme ici une partie du talon 4.

Les moyens de liaison 12 comprennent un fil souple 17 inextensible s'étendant dans un conduit 18 du support 14 et comportant une extrémité attachée à la centrale inertielle 11 et à l'opposé une extrémité attachée à un contrepoids 19 reçu à coulissement vertical dans le support 11 entre une position en saillie de la surface inférieure 16 du support 14 pour prendre appui sur le sol et une position enfoncée. Un organe de rappel 20 rappel élastiquement le contrepoids 19 dans sa position descendue en saillie. L'organe de rappel 20 peut être un ressort hélicoïdal de compression ou une couche de matériau élastomère. Le fil souple 17 a une longueur telle que le fil est tendu lorsque la chaussure est décollée du sol et lâche lorsque la chaussure est en appui contre le sol. Ainsi, lorsque la chaussure est décollée du sol, le contrepoids 19 est en saillie de la surface inférieure 16 et la centrale inertielle 11 est appliquée contre le fond du logement 15 (fil souple 17 tendu) et, lorsque la chaussure est en appui contre le sol, la surface inférieure 16, le contrepoids 19 et la centrale inertielle 11 sont posés au sol (fil souple lâche).

Le fond du logement 15 et la partie supérieure de la centrale inertielle 11 comprennent de préférence des reliefs de forme complémentaire pour assurer une solidarisation de la centrale inertielle 11 avec le fond du logement 15 sous l'effet de la tension du fil souple 17. Ces reliefs comprennent ici des bombés coniques 21 ménagés sur la surface supérieure de la centrale inertielle 11 pour coopérer avec des renfoncements coniques 22 ménagés dans le fond du logement 15. Ces reliefs assurent ici notamment une solidarisation en rotation de la centrale inertielle avec le support 11 autour d'un axe du logement 15.

Il est prévu un capuchon 23 pour venir se mettre sous le talon 4 et protéger le dispositif inertiel 10 lorsque l'utilisateur marche à l'extérieur. Le capuchon assure une étanchéité suffisante pour empêcher l'introduction d'humidité ou de salissures dans les logements recevant la centrale inertielle 11 et le contrepoids 19. La centrale inertielle est également de préférence étanche aux poussières et à l'humidité.

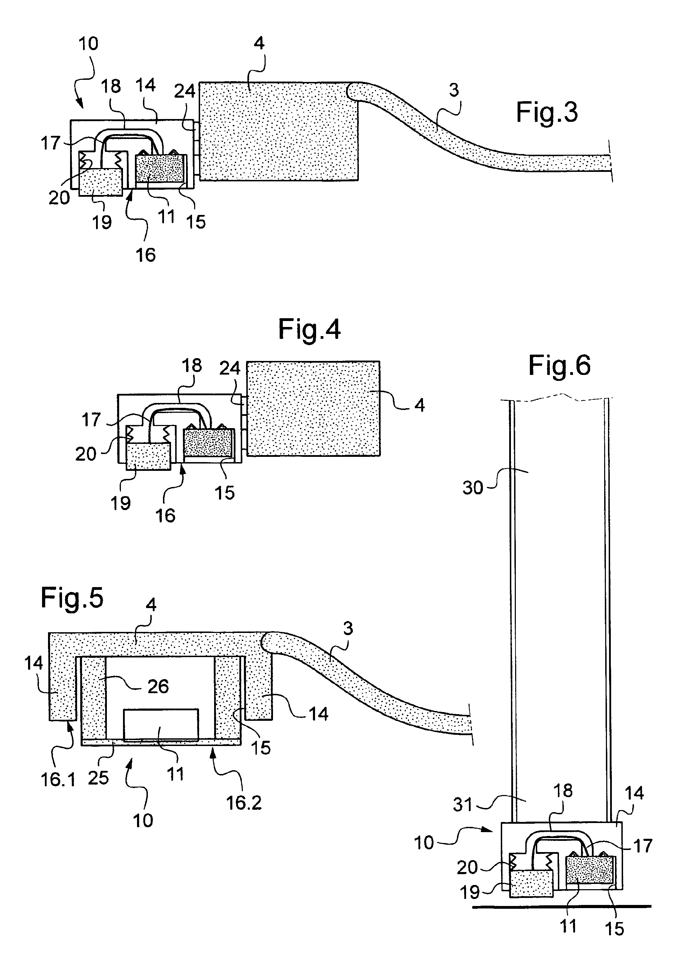

En référence aux figures 3 et 4 et selon le deuxième mode de réalisation, le support 14 est indépendant de la semelle 3 de la chaussure 1 et est pourvu de moyens de fixation temporaire 24 à la semelle. Les moyens de fixation temporaire 24 sont par exemple des moyens autocollants ou auto-agrippants tels que ceux de la marque VELCRO.

A la figure 3, le dispositif inertiel de navigation 10 est fixé à l'arrière du talon 4 et, à la figure 4, sur le côté du talon 4.

Dans le troisième mode de réalisation de la figure 5, la chaussure 1 incorpore un dispositif inertiel de navigation 10 qui comporte un support 14 formant le talon de la semelle 3 de la chaussure 1. Le support 14 définit un logement 15 recevant la centrale inertielle 11 à coulissement vertical et possède une surface inférieure 16.1 destinée à s'étendre en regard du sol lorsque la chaussure est en appui contre le sol. La surface inférieure 16.1 constitue ici une surface d'appui du support 14 contre le sol. Le logement 15 débouche sur la surface inférieure 16.1 pour permettre une mise en contact de la centrale inertielle 11 avec le sol.

Une plaque rigide 25 ferme le logement 15 et la centrale inertielle 11 est solidaire de la surface supérieure de la plaque rigide 25.

Une portion souple 26 est disposée entre le support 11 et la plaque rigide 25 dont est solidaire la centrale inertielle 11. La portion souple 26 a ici la forme d'un manchon élastiquement déformable entourant la centrale inertielle 11. La partie souple 26 est ainsi agencée pour rappeler la plaque rigide 25 en saillie de la surface inférieure 16 et pour limiter la transmission à la centrale inertielle 11 de mouvements de la chaussure lorsque la chaussure est en appui contre le sol. Lorsque la chaussure est en appui contre le sol, la surface inférieure 16.2 de la plaque rigide 25 est en appui contre le sol, l'effort d'appui de la chaussure sur le sol est repris par le support 14 et la portion souple 26 découple la centrale inertielle du support et donc de la chaussure en limitant la transmission à la centrale inertielle 11 de mouvements de la chaussure 1.

A la figure 6, est représenté un bâton de marche 30 dont l'extrémité inférieure 31 est pourvue d'un dispositif inertiel de navigation 10 en tout point semblable à celui du premier mode de réalisation. Le support 14 forme ici l'embout d'appui sur le sol du bâton.

Bien entendu, l'invention n'est pas limitée aux modes de réalisation décrits mais englobe toute variante entrant dans le champ de l'invention telle que définie par les revendications.

En particulier, l'invention est applicable à tout objet destiné à venir de manière intermittente en appui avec une surface et plus particulièrement le sol.

Le dispositif du troisième mode de réalisation est aussi utilisable pour prendre appui sur un mur ou tout autre surface non horizontale, la gravité n'intervenant pas dans le découplage.

Le fil souple peut avoir une extrémité fixée au fond du logement 15 et une extrémité attachée à la centrale inertielle 11. Le fil souple a une longueur telle qu'il est lâche lorsque la face inférieure de la centrale inertielle 11 affleure la surface inférieure 16 et tendu lorsque la centrale inertielle 11 est en saillie de la surface inférieure 16. Un organe de rappel élastique est de préférence interposé entre le fond du logement 15 et la centrale inertielle 11 pour repousser la centrale inertielle 11 en saillie de la surface inférieure 16.

Une plaque rigide fixe peut fermer le logement 15 et la centrale inertielle peut être reliée au support 11 pour venir en appui de la plaque rigide seulement lorsque la chaussure est posée au sol.

La centrale inertielle peut comprendre un nombre différent de gyromètres et d'accéléromètres.

Le terminal numérique 13 peut comprendre un afficheur braille et/ou donner des indications sonores ou vocales et/ou visuelles.

On notera que la navigation est optionnelle, l'invention pouvant être utilisée uniquement pour localiser le porteur du dispositif.

Le fil souple peut présenter une certaine extensibilité tant que celle-ci n'empêche pas d'avoir le fil lâche lorsque le contrepoids et la centrale inertielle sont posés au sol et le fil tendu lorsque ceux-ci sont décollés du sol.

## Revendications

1. Dispositif inertiel de navigation (10) destiné à équiper un objet (1) en appui intermittent avec une surface, le dispositif comprenant une centrale inertielle (11) comportant au moins un capteur inertiel, et des moyens de liaison mécanique de la centrale inertielle à l'objet (12), **caractérisé en ce que** les moyens de liaison (12) sont agencés pour assurer, entre la centrale inertielle (11) et l'objet (11), un couplage mécanique lorsque l'objet (1) n'est pas en appui contre la surface et un découplage mécanique lorsque l'objet (1) est en appui contre la surface de telle manière que la centrale inertielle (11) soit sensiblement immobile par rapport à la surface lorsque l'objet est en appui contre la surface.

2. Dispositif selon la revendication 1, dans lequel les moyens de liaison (12) comprennent un support (14) définissant un logement (15) recevant la centrale inertielle (11) à coulissement vertical et ayant une surface inférieure (16) destinée à s'étendre en regard du sol lorsque l'objet (1) est en appui contre la surface.

3. Dispositif selon la revendication 2, dans lequel la surface inférieure (16) constitue une surface d'appui du support contre la surface.

4. Dispositif selon la revendication 3, dans lequel le logement (14) de réception de la centrale inertielle (11) débouche sur la surface inférieure (14) pour permettre une mise en contact de la centrale inertielle (11) avec la surface.

5. Dispositif selon la revendication 3, dans lequel la surface inférieure (16) appartient à une plaque rigide (25) fermant le logement de réception de la centrale inertielle (11), la centrale inertielle (11) venant en appui contre la plaque rigide (25) au moins lorsque la plaque rigide (25) est en contact avec la surface.

6. Dispositif selon l'une quelconque revendication 2 à 5, dans lequel les moyens de liaison (12) comprennent un fil souple (17) reliant la centrale inertielle (11) au support (14) et ayant une longueur telle que le fil est tendu lorsque l'objet (1) est décollé du sol et lâche lorsque l'objet (1) est en appui contre la surface.

7. Dispositif selon la revendication 6, dans lequel le fil (17) s'étend dans un conduitvet comporte une extrémité attachée à la centrale inertielle (11) et à l'opposé une extrémité attachée à un contrepoids (19) reçu à coulissement vertical dans le support (14) entre une position en saillie de la surface inférieure (16) du support pour prendre appui sur la surface et une position enfoncée.

8. Dispositif selon l'une quelconque des revendications 2 à 5, dans lequel le support (14) comporte une portion souple (26) disposée entre le support (14) et la centrale inertielle (11) et agencée pour limiter la transmission à la centrale inertielle (11) de mouvements de l'objet (1) lorsque l'objet (1) est en appui contre la surface.

9. Chaussure ayant une semelle équipée d'un dispositif conforme à l'une quelconque des revendications 2 à 8, dans laquelle le support (14) forme une partie de la semelle.

10. Equipement de la personne, l'équipement étant pourvu d'un dispositif conforme à l'une quelconque des revendications 1 à 8.

## Claims

1. An inertial navigation device (10) for fitting to an article (1) that bears intermittently against a surface, the device comprising an inertial unit (11) having at least one inertial sensor, and mechanical connection means (12) connecting the inertial unit to the article, the device being **characterized in that** the connection means (12) are arranged to provide mechanical coupling between the inertial unit (11) and the article (1) when the article (1) is not bearing against the surface and to provide mechanical decoupling therebetween when the article (1) is bearing against the surface, in such a manner that the inertial unit (11) is substantially stationary relative to the surface when the article is bearing against the surface.

2. A device according to claim 1, wherein the connection means (12) comprise a support (14) defining a housing (15) that receives the inertial unit (11) to slide vertically and that has a bottom surface (16) for extending facing the ground when the article (1) is bearing against the surface.

3. A device according to claim 2, wherein the bottom surface (16) constitutes a bearing surface of the support for bearing against the surface.

4. A device according to claim 3, wherein the housing (14)receiving the inertial unit (11) opens out into the bottom surface (16) in order to enable the inertial unit (11) to be put into contact with the surface.

5. A device according to claim 3, wherein the bottom surface (16) forms part of a rigid plate (25) closing the housing for receiving the inertial unit (11), the inertial unit (11) coming to bear against the rigid plate (25) at least when the rigid plate (25) is in contact with the surface.

6. A device according to any one of claims 2 to 5, wherein the connection means (12) comprise a flexible wire (17) connecting the inertial unit (11) to the support (14) and having a length such that the wire is tensioned when the article (1) is lifted off the ground and slack when the article (1) is bearing against the surface.

7. A device according to claim 6, wherein the wire (17) extends in a duct (18) and has one end attached to the inertial unit (11) and an opposite end attached to a counterweight (19) received to slide vertically in the support (14) between a position projecting from the bottom surface (16) of the support in order to bear against the surface, and a pushed-in position.

8. A device according to any one of claims 2 to 5, wherein the support (14) includes a flexible portion (26) arranged between the support (14) and the inertial unit (11) and arranged to limit the transmission of movements of the article (1) to the inertial unit (11) when the article (1) is bearing against the surface.

9. A shoe including a sole fitted with a device in accordance with any one of claims 2 to 8, wherein the support (14) forms a portion of the sole.

10. Equipment for a person, the equipment being provided with a device in accordance with any one of claims 1 to 8.

## Patentansprüche

1. Trägheitsnavigationsvorrichtung zur (10) zum Ausstatten eines intermittierend an einer Oberfläche anliegenden Objekts (1), wobei die Vorrichtung eine Trägheitszentrale (11), die mindestens einen Trägheitssensor enthält, und Mittel zur mechanischen Verbindung der Trägheitszentrale mit dem Objekt (12) umfasst, **dadurch gekennzeichnet, dass** die Verbindungsmittel (12) so ausgebildet sind, dass sie zwischen der Trägheitszentrale (11) und dem Objekt (1) eine mechanische Kopplung gewährleisten, wenn das Objekt (1) nicht an der Oberfläche anliegt, und eine mechanische Entkopplung, wenn das Objekt (1) so an der Oberfläche anliegt, dass die Trägheitszentrale (11) relativ zu der Oberfläche im Wesentlichen unbeweglich ist, wenn das Objekt an der Oberfläche anliegt.

2. Vorrichtung nach Anspruch 1, bei der die Verbindungsmittel (12) einen Träger (14) umfassen, der einen Sitz (15) zur Aufnahme der Trägheitszentrale (11) definiert, so dass diese vertikal verschiebbar ist, und der eine untere Fläche (16) aufweist, die dazu bestimmt ist, sich gegenüber dem Boden zu erstrecken, wenn das Objekt (1) an der Oberfläche anliegt.

3. Vorrichtung nach Anspruch 2, bei der die untere Fläche (16) eine Auflagefläche zum Aufliegen des Trägers auf der Oberfläche bildet.

4. Vorrichtung nach Anspruch 3, bei der der Sitz (14) zur Aufnahme der Trägheitszentrale (11) in die untere Fläche (16) mündet, um eine Kontaktaufnahme der Trägheitszentrale (11) mit der Oberfläche zu ermöglichen.

5. Vorrichtung nach Anspruch 3, bei der die untere Fläche (16) zu einer starren Platte (25) gehört, die den Sitz zur Aufnahme der Trägheitszentrale (11) verschließt, wobei die Trägheitszentrale (11) zur Anlage an der starren Platte (25) kommt, zumindest dann, wenn die starre Platte (25) sich in Kontakt mit der Oberfläche befindet.

6. Vorrichtung nach einem der Ansprüche 2 bis 5, bei dem die Verbindungsmittel (12) einen biegsamen Draht umfassen (17), der die Trägheitszentrale (11) mit dem Träger (14) verbindet und eine solche Länge aufweist, dass der Draht gespannt ist, wenn sich das Objekt (1) vom Boden entfernt, und locker ist, wenn das Objekt (1) an der Oberfläche anliegt.

7. Vorrichtung nach Anspruch 6, bei dem sich der Draht (17) in einer Leitung (18) erstreckt und ein Ende aufweist, das an der Trägheitszentrale (11) angebracht ist und auf der entgegengesetzten Seite ein Ende aufweist, das an einem Gegengewicht (19) befestigt ist, das in dem Träger (14) zwischen einer Position, in der es über die untere Fläche (16) des Trägers übersteht, um an der Oberfläche anzuliegen, und einer eingedrückten Position vertikal verschiebbar ist.

8. Vorrichtung nach einem der Ansprüche 2 bis 5, bei der der Träger (14) einen nachgiebigen Abschnitt (26) umfasst, der zwischen dem Träger (14) und der Trägheitszentrale (11) angeordnet ist und der so ausgebildet ist, dass die Übertragung von Bewegungen des Objekts (1) auf die Trägheitszentrale (11) eingeschränkt ist, wenn das Objekt (1) an der Oberfläche anliegt.

9. Schuh mit einer Sohle, die mit einer Vorrichtung versehen ist, die einem der Ansprüche 2 bis 8 entspricht, bei dem der Träger (14) einen Teil der Sohle bildet.

10. Ausrüstung für eine Person, wobei die Ausrüstung mit einer Vorrichtung versehen ist, die einem der Ansprüche 1 bis 8 entspricht.
